(19) Europäisches Patentamt
European Patent Office
Office européen des brevets

(11) Veröffentlichungsnummer: **0 058 239**
**B1**

(12) # EUROPÄISCHE PATENTSCHRIFT

(45) Veröffentlichungstag der Patentschrift: **03.10.84**

(51) Int. Cl.³: **D 06 M 15/66**, C 08 L 83/04, C 09 D 3/82, B 32 B 27/00

(21) Anmeldenummer: **81109066.1**

(22) Anmeldetag: **28.10.81**

(54) **Verfahren zur Beschichtung von Unterlagen.**

(30) Priorität: **12.02.81 DE 3105148**

(43) Veröffentlichungstag der Anmeldung: **25.08.82 Patentblatt 82/34**

(45) Bekanntmachung des Hinweises auf die Patenterteilung: **03.10.84 Patentblatt 84/40**

(84) Benannte Vertragsstaaten: **AT BE CH DE FR GB IT LI NL**

(56) Entgegenhaltungen:
**DE - A - 1 469 327**
**DE - A - 2 459 806**
**DE - A - 2 601 159**
**US - A - 3 536 779**

**PATENTS ABSTRACTS OF JAPAN, Band 3, Nr. 100(C56), 24. August 1979, Seite 149C56, Tokyo, JP.**

(73) Patentinhaber: **WACKER-CHEMIE GMBH, Prinzregentenstrasse 22, D-8000 München 22 (DE)**

(72) Erfinder: **Marwitz, Heinrich, Dr. Dipl.-Chem., Marienberger Strasse 48 f, D-8263 Burghausen (DE)**
Erfinder: **Ullrich, Kurt, Bonifaz-Huber-Strasse 10, D-8263 Burghausen (DE)**
Erfinder: **Huhn, Karl, Dr. Dipl.-Chem., Bachstrasse 16, D-8263 Burghausen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

EP 0 058 239 B1

**Beschreibung**

Beispielsweise aus DE-A Nr. 2601159, offengelegt am 21. Juli 1977, Wacker-Chemie GmbH (entspricht GB-A Nr. 1541801), ist es bereits bekannt, Unterlagen, einschliesslich Geweben aus natürlichen oder synthetischen Fasern, aus wässeriger Emulsion mit in den endständigen Einheiten SiC-gebundene Vinylgruppen aufweisendem Diorganopolysiloxan, mindestens 3 Si-gebundene Wasserstoffatome je Molekül aufweisendem Organopolysiloxan und die Anlagerung von Si-gebundenem Wasserstoff an Vinylgruppen förderndem Katalysator zu beschichten. Diese bekannte Emulsion kann auch Verdickungsmittel und die Anlagerung von Si-gebundenem Wasserstoff an Vinylgruppen bei Raumtemperatur verzögernde bzw. verhindernde Mittel enthalten. Im Gegensatz zu den bisher bekannten Beschichtungen dieser Art verbinden die erfindungsgemäss hergestellten Beschichtungen hohe Wasserdichtigkeit mit hohem Ausmass der Wasserabweisung, guter Abriebfestigkeit und guter Wasch- und Reinigungsbeständigkeit.

Gegenstand der Erfindung ist ein Verfahren zur Beschichtung von Unterlagen, insbesondere von textilen Flächengebilden, durch Auftragen einer wässerigen Emulsion auf die jeweils zu beschichtende Unterlage, wobei die Emulsion enthält

1) in den endständigen Einheiten SiC-gebundene Vinylgruppen aufweisendes Diorganopolysiloxan,

2) mindestens 3 Si-gebundene Wasserstoffatome je Molekül aufweisendes Organopolysiloxan,

3) die Anlagerung von Si-gebundenem Wasserstoff an aliphatische Mehrfachbindung fördernden Katalysator,

und gegebenenfalls

4) eine derartige Anlagerung bei Raumtemperatur verzögerndes oder verhinderndes Mittel,

und ausserdem im Gemisch mit oder getrennt von dieser Emulsion von

5) Verdickungsmittel,

und in bekannter Weise erfolgende Vernetzung vom Organopolysiloxan, dadurch gekennzeichnet, dass vor dieser Vernetzung gleichzeitig mit oder getrennt von mindestens einem der Bestandteile 1 bis 5 auf die zu beschichtende Unterlage aufgetragen wird,

6) durch Trimethylsiloxygruppen endblockiertes Diorganopolysiloxan, worin an 10 bis 50% der Anzahl der Diorganosiloxaneinheiten je eine Vinylgruppe als organischer Rest gebunden ist, während die übrigen organischen Reste in diesem Diorganopolysiloxan frei von aliphatischen Mehrfachbindungen sind,

7) als Haftmittel geeignete Organosiliciumverbindung, und

8) mindestens eine wässerige Dispersion von Polymeren aus Ethylen, Vinyl oder Acrylsäureester oder Mischpolymeren aus mindestens zwei dieser Monomeren.

Nach dem erfindungsgemässen Verfahren können alle Unterlagen beschichtet werden, die auch bisher aus wässeriger Emulsion mit SiC-gebundene Vinylgruppen aufweisendem Diorganopolysiloxan, Si-gebundenen Wasserstoff aufweisendem Organopolysiloxan und die Anlagerung von Si-gebundenem Wasserstoff an aliphatische Mehrfachbindung förderndem Katalysator beschichtet werden konnten. Beispiele für solche Unterlagen sind ausser textilen Flächengebilden Papier, Pappe, einschliesslich solcher aus Asbest, weiterhin Holz und Kork. Bei Papier kann es sich um minderwertige Papiersorten, wie saugfähige Papiere, oder hochwertige Papiersorten, wie holzfreie Papiere handeln. Bei den textilen Flächengebilden kann es sich um solche aus natürlichen oder synthetischen Fasern handeln. Diese Fasern können gewebt oder ungewebt sein, z.B. in Form von Vliesen vorliegen. Besonders gut wasserdichte Beschichtungen werden bei dem erfindungsgemässen Verfahren auf textilen Flächengebilden erzielt, die mindestens zum Teil aus feinen Filamentgarnen gewebt wurden, wie Polyamidtaft und Polyestergewebe mit Filamentgarn als Kettgarn und Stapelfasergarn als Schussgarn.

Vorzugsweise beträgt die Gesamtmenge an Wasser, in dem die Bestandteile 1 bis 8 gelöst bzw. dispergiert sind, 50 bis 200 Gew.-%, bezogen auf das Gesamtgewicht der jeweils verwendeten Bestandteile 1 bis 8.

Bei den in den endständigen Einheiten SiC-gebundene Vinylgruppen aufweisenden Diorganopolysiloxanen 1, die im Rahmen der Erfindung eingesetzt werden, kann es sich um beliebige Diorganopolysiloxane mit Vinylgruppen in den endständigen Einheiten handeln, die auch bisher in wässeriger Emulsion eingesetzt werden konnten. Diese Organopolysiloxane sind insbesondere solche, die durch die allgemeine Formel

$$(CH_2=CH)_xSiR_{3-x}O(SiR_2O)_nSiR_{3-x}(CH=CH_2)_x$$

wiedergegeben werden können. In dieser Formel bedeutet R gleiche oder verschiedene, zumindest im wesentlichen von aliphatischen Mehrfachbindungen freie Kohlenwasserstoffreste, die substituiert sein können, x ist 1, 2 oder 3, vorzugsweise 1, und n ist eine Zahl mit einem solchen Wert, dass die Diorganopolysiloxane eine durchschnittliche Viskosität von 1000 bis 100000 mPa·s bei 25°C haben.

Innerhalb bzw. entlang der Organopolysiloxankette der oben angegebenen Formel können, was bei derartigen Formeln üblicherweise nicht dargestellt wird, zusätzlich zu den Diorganosiloxaneinheiten, also den Einheiten der Formel $SiR_2O$, noch andere Siloxaneinheiten vorliegen. Beispiele für solche anderen, meist jedoch lediglich als Verunreinigungen vorliegenden Siloxaneinheiten sind insbesondere solche der Formeln $RSiO_{3/2}$, $R_3SiO_{1/2}$ und $SiO_{4/2}$, wobei R jeweils die oben dafür angegebene Bedeutung hat. Die Menge an solchen anderen Siloxaneinheiten beträgt vorzugsweise höchstens 1 Mol-% in den Molekülen von Diorganopolysiloxan 1.

Beispiele für die anderen SiC-gebundenen organischen Reste als die SiC-gebundenen Vinylgruppen in den Diorganopolysiloxanen 1 und somit auch für die Kohlenwasserstoffreste R in der oben angegebenen Formel sind Alkylreste, wie der Methyl-, Ethyl-, n-Propyl- und Isopropylrest sowie Butyl-, Octyl-, Tetradecyl- und Octadecylreste; cycloaliphatische Kohlenwasserstoffreste, wie der Cyclopentyl- und Cyclohexylrest sowie Methylcyclohexylreste; Arylreste, wie der Phenylrest; Alkarylreste, wie Tolylreste; und Aralkylreste, wie der Benzyl- und β-Phenylethylrest. Als Beispiele für substituierte Kohlenwasserstoffreste in den Diorganopolysiloxanen 1 seien halogenierte Kohlenwasserstoffreste, wie der 3,3,3-Trifluorpropylrest und o-, p- und m-Chlorphenylreste, und Cyanalkylreste, wie der Cyanethylrest, genannt. Wegen der leichteren Zugänglichkeit sind vorzugsweise mindestens 90% der Anzahl der anderen SiC-gebundenen organischen Reste als die SiC-gebundenen Vinylgruppen in den Diorganopolysiloxanen 1 und vor allem die von aliphatischen Mehrfachbindungen freien organischen Reste in den endständigen Einheiten der Diorganopolysiloxane 1 Methylreste.

Bei den Diorganopolysiloxanen 1 kann es sich um gleiche Mischpolymere oder um Gemische aus verschiedenen Mischpolymeren mit jeweils gleichem Polymerisationsgrad oder um Gemische aus gleichen oder verschiedenen Mischpolymeren verschiedenen Polymerisationsgrades handeln. Wenn die Diorganopolysiloxane 1 verschiedene Diorganosiloxaneinheiten enthalten, so können diese verschiedenen Einheiten in statistischer (random) Verteilung oder in Form von Blockmischpolymerisaten vorliegen.

Damit die Diorganopolysiloxane 1 leicht emulgierbar sind, ist es bevorzugt, dass sie eine durchschnittliche Viskosität von 3000 bis 20000 mPa·s bei 25°C aufweisen.

Als mindestens 3 Si-gebundene Wasserstoffatome je Molekül aufweisende Organopolysiloxane 2 können auch bei dem erfindungsgemässen Verfahren die gleichen mindestens 3 Si-gebundene Wasserstoffatome je Molekül aufweisenden Organopolysiloxane verwendet werden, die bei allen bisher bekannten Verfahren zum Herstellen von Beschichtungen aus Vinylgruppen aufweisendem Organopolysiloxan und mindestens 3 Si-gebundene Wasserstoffatome je Molekül aufweisendem Organopolysiloxan und die Anlagerung von Si-gebundenem Wasserstoff an aliphatische Mehrfachbindung förderndem Katalysator eingesetzt werden konnten und in wässeriger Emulsion anwendbar sind.

In den mindestens 3 Si-gebundene Wasserstoffatome je Molekül aufweisenden Organopolysiloxanen 2 sind die nicht durch Wasserstoff- und Siloxansauerstoffatome abgesättigten Siliciumvalenzen vorzugsweise durch Methyl-, Ethyl- oder Phenylreste oder ein Gemisch aus mindestens zwei solcher Reste abgesättigt.

Bevorzugt als mindestens 3 Si-gebundene Wasserstoffatome je Molekül aufweisende Organopolysiloxane 2 sind solche der allgemeinen Formel

$$(CH_3)_3SiO(SiR'_2O)_pSi(CH_3)_3$$

wobei R' Wasserstoff oder gleiche oder verschiedene Reste mit der Bedeutung Methyl, Ethyl oder Phenyl und p eine ganze Zahl im Wert von 10 bis 500 bedeutet, mit der Massgabe, dass an ein Si-Atom jeweils nur ein Wasserstoffatom gebunden ist und dass das Verhältnis von $R'_2SiO$-Einheiten, in denen beide R' Kohlenwasserstoffreste sind, zu den HR'Si-Einheiten, in denen R' ein Kohlenwasserstoffrest ist, 3:1 bis 1:3 ist. Vorzugsweise bedeutet auch R' Methyl, wenn es nicht Wasserstoff ist.

Auch als mindestens 3 Si-gebundene Wasserstoffatome je Molekül aufweisende Organopolysiloxane können gleiche oder verschiedene Moleküle dieser Organopolysiloxanart eingesetzt werden.

Mindestens 3 Si-gebundene Wasserstoffatome je Molekül aufweisendes Organopolysiloxan 2 wird vorzugsweise in Mengen von 5 bis 15 Gew.-Teilen je 60 bis 90 Gew.-Teile Diorganopolysiloxan 1 eingesetzt.

Als die Anlagerung von Si-gebundenem Wasserstoff an aliphatische Mehrfachbindung fördernde Katalysatoren (3) können im Rahmen des erfindungsgemässen Verfahrens beliebige die Anlagerung von Si-gebundenem Wasserstoff an aliphatische Mehrfachbindung fördernde Katalysatoren verwendet werden.

Beispiele für solche Katalysatoren sind metallisches und feinverteiltes Platin, Ruthenium, Rhodium, Palladium und Iridium, wobei sich diese Metalle jeweils auf festen Trägern, wie Siliciumdioxyd, Aluminiumoxyd oder Aktivkohle, befinden können, und Verbindungen bzw. Komplexe dieser Elemente, wie $PtCl_4$, $H_2PtCl_6 \cdot 6H_2O$, $Na_2PtCl_4 \cdot 4H_2O$, Platin-Olefin-Komplexe, Platin-Alkohol- oder Platin-Alkoholat-Komplexe, Platin-Ether-Komplexe, Platin-Aldehyd-Komplexe, Platin-Keton-Komplexe, einschliesslich Umsetzungsprodukten aus $H_2PtCl_66H_2O$ und Cyclohexanon, Platin-Vinylsiloxan-Komplexe, insbesondere Platin-Divinyltetramethyldisiloxan-Komplexe mit oder ohne Gehalt an nachweisbarem anorganisch gebundenem Halogen, Bis-(γ-picolin)platindichlorid, Trimethylenpyridinplatindichlorid, Dicyclopentadienplatindichlorid und Dimethylsulfoxydethylenplatin(II)dichlorid sowie ein Umsetzungsprodukt aus in 1-Octen gelöstem Platintetrachlorid mit sek.-Butylamin.

Platinverbindungen bzw. Platinkomplexe sind als die Anlagerung von Si-gebundenem Wasserstoff an aliphatische Mehrfachbindung fördernde Katalysatoren 3 bevorzugt.

Es kann eine Art von die Anlagerung von Si-gebundenem Wasserstoff an aliphatische Mehrfachbindung fördernder Katalysator 3 verwendet werden. Es kann aber auch ein Gemisch aus mindestens zwei solcher Katalysatoren verwendet werden.

Wird als die Anlagerung von Si-gebundenem Wasserstoff an aliphatische Mehrfachbindung fördernder Katalysator 3 Platinverbindung bzw. Platinkomplex eingesetzt, so wird derartiger Katalysator vorzugsweise in Mengen von 0,2 bis 1 Gew.-Teilen, berechnet als elementares Platin, das im Verdünnungsmittel in einer Konzentration

von 1 Gew.-% vorliegt, bevor es beim erfindungsgemässen Verfahren eingesetzt wird, je 60 bis 90 Gew.-Teile Diorganopolysiloxan 1 eingesetzt.

Damit die bei dem erfindungsgemässen Verfahren eingesetzten Zusammensetzungen, die sowohl Organopolysiloxan mit SiC-gebundenen Vinylgruppen als auch Organopolysiloxan mit Si-gebundenem Wasserstoff und die Anlagerung von Si-gebundenem Wasserstoff an aliphatische Mehrfachbindung fördernden Katalysator enthalten, genügend beständig sind, können diese Zusammensetzungen mindestens ein die Anlagerung von Si-gebundenem Wasserstoff an aliphatische Mehrfachbindung bei Raumtemperatur verzögerndes oder verhinderndes Mittel 4 enthalten. Beispiele für derartige Mittel sind Acetylenalkohole, wie Ethinylcyclohexanol und 2-Methyl-3-butin-2-ol, sowie 1,3-Divinyl-1,1,3,3-tetramethyldisiloxan und Trichlorethylen.

Wird als die Anlagerung von Si-gebundenem Wasserstoff an aliphatische Mehrfachbindung bei Raumtemperatzur verzögerndes oder verhinderndes Mittel 4 ein Acetylenalkohol verwendet, so vorzugsweise in Mengen von 0,05 bis 2 Gew.-Teilen je 60 bis 90 Gew.-Teilen Diorganopolysiloxan 1.

Als Verdickungsmittel 5 können im Rahmen des erfindungsgemässen Verfahrens beliebige Verdickungsmittel für wässerige Systeme eingesetzt werden. Bevorzugt sind Salze der Polyacrylsäure oder Polymethylacrylsäure, Polyurethane, Poly-N-vinylpyrrolidone und deren Mischpolymere und Celluloseether, einschliesslich Carboxymethylcellulose, oder Gemische aus mindestens zwei solcher Verdickungsmittel. Weitere Beispiele für Verdickungsmittel 5 sind Polyvinylalkohole, Alginate und Stärke.

Verdickungsmittel 5 wird vorzugsweise in Mengen von 1 bis 10 Gew.-Teilen je 60 bis 90 Gew.-Teile Diorganopolysiloxan 1 eingesetzt.

Durch Trimethylsiloxygruppen endblockiertes Diorganopolysiloxan 6, worin an 10 bis 50% der Anzahl der Si-Atome der Diorganosiloxaneinheiten je eine Vinylgruppe als organischer Rest gebunden ist, während die übrigen organischen Reste in diesem Organopolysiloxan frei von aliphatischen Mehrfachbindungen sind, kann durch die allgemeine Formel

$$(CH_3)_3SiO[Si(CH{=}CH_2)RO]_n(SiR_2O)_mSi(CH_3)_3$$

wiedergegeben werden. In dieser Formel hat R die oben dafür angegebene Bedeutung; n und m sind ganze Zahlen, wobei das Verhältnis von m:n 10:1 bis 1:1 beträgt.

Auch hier können innerhalb bzw. entlang der Organopolysiloxankette zusätzlich zu den Diorganosiloxaneinheiten, also den Einheiten der Formel $SiR_2O$ und $Si(CH{=}CH_2)RO$, noch andere Siloxaneinheiten vorliegen. Beispiele für solche anderen, meist jedoch hier auch lediglich als Verunreinigungen vorliegenden Siloxaneinheiten sind auch hier insbesondere solche der Formeln $RSiO_{3/2}$, $R_3SiO_{1/2}$ und $SiO_{4/2}$, wobei R jeweils die oben dafür angegebene Bedeutung hat. Die Menge an solchen anderen Siloxaneinheiten beträgt vorzugsweise höchstens 1 Mol-% auch in den Molekülen von Diorganopolysiloxan 6.

Die oben angegebenen Beispiele für Kohlenwasserstoffreste R im Diorganopolysiloxan 1 gelten in vollem Umfang auch für von aliphatischen Mehrfachbindungen freie Kohlenwasserstoffreste im Diorganopolysiloxan 6. Vorzugsweise sind auch mindestens 90% der Anzahl der Reste R im Diorganopolysiloxan 6 Methylreste.

Auch bei den Diorganopolysiloxanen 6 kann es sich um gleiche Mischpolymere oder um Gemische aus verschiedenen Mischpolymeren mit jeweils gleichem Polymerisationsgrad oder um Gemische aus gleichen oder verschiedenen Mischpolymeren verschiedenen Polymerisationsgrades handeln. Die verschiedenen Diorganosiloxaneinheiten können in statistischer Verteilung oder in Form von Blockmischpolymeren vorliegen.

Vorzugsweise haben die Diorganopolysiloxane 6 eine durchschnittliche Viskosität von 500 bis 5000 mPa·s bei 25°C.

Vorzugsweise wird durch Trimethylsiloxygruppen endblockiertes Diorganopolysiloxan 6, worin an 10 bis 50% der Anzahl der Si-Atome der Diorganosiloxaneinheiten je eine Vinylgruppe als organischer Rest gebunden ist, während die übrigen organischen Reste in diesem Organopolysiloxan frei von aliphatischen Mehrfachbindungen sind, in Mengen von 3 bis 30 Gew.-Teilen je 60 bis 90 Gew.-Teilen Diorganopolysiloxan eingesetzt.

Beispiele für als Haftmittel geeignete Organosiliciumverbindungen 7 sind Silane mit hydrolysierbaren Resten und über Kohlenstoff an Silicium gebundenen Vinyl-, Acryloxy-, Methacryloxy-, Epoxy- oder Aminogruppen, Teilhydrolysate solcher Silane und z.B. Umsetzungsprodukte aus Vinyltriacetoxysilan und dem Silan der Formel

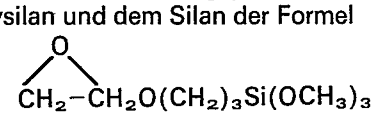

Es kann eine Art von Haftmittel verwendet werden. Es kann aber auch ein Gemisch aus mindestens zwei verschiedenen Haftmitteln verwendet werden.

Vorzugsweise wird Haftmittel 7 in Mengen von 1 bis 15 Gew.-Teilen je 60 bis 90 Gew.-Teile Diorganopolysiloxan 1 verwendet. Es sei in diesem Zusammenhang bemerkt, dass die Summe der jeweils eingesetzten Mengen innerhalb der oben angegebenen bevorzugten Mengenbereiche der Bestandteile 1 bis 4, 6 und 7 vorzugsweise 100 beträgt.

Die wässerige Dispersion 8 von Polymeren aus Ethylen, Vinylacetat oder Acrylsäureester oder Mischpolymeren aus mindestens zwei dieser Monomeren enthält als Polymere bzw. Mischpolymere vorzugsweise solche, die vernetzbar sind.

Vorzugsweise wird wässerige Dispersion 8 in Mengen von 50 bis 2000 Gew.-Teilen je 60 bis 90 Gew.-Teile Diorganopolysiloxan 1 eingesetzt.

Vorzugsweise werden Organopolysiloxanemulsionen mit Si-gebundenen Vinylgruppen getrennt von Organopolysiloxanemulsionen mit Si-gebundenem Wasserstoff aufbewahrt, um eine vorzeitige

Vernetzung zu vermeiden. Es ist auch bevorzugt, die Anlagerung von Si-gebundenem Wasserstoff an aliphatische Mehrfachbindung fördernden Katalysator 3 mit Diorganopolysiloxan 1 oder 6 oder einem Gemisch aus solchen Diorganopolysiloxanen zu vermischen, bevor dieser Katalysator mit Wasser oder Organopolysiloxan 2 in Berührung kommt.

Für die Herstellung der wässerigen Dispersionen, welche Bestandteil 1 bis 3 und gegebenenfalls auch 4 und 5 enthalten, können beliebige Dispergiermittel verwendet werden, die auch sonst zur Herstellung von Organopolysiloxanemulsionen, einschliesslich der Polymerisation von Organosiloxanen in wässeriger Emulsion, eingesetzt werden. Bevorzugt sind nichtionische Emulgatoren.

Zusätzlich zu den bisher genannten Bestandteilen der erfindungsgemäss verwendeten Beschichtungsmittel können gegebenenfalls weitere Stoffe mitverwendet werden. Beispiele für solche weiteren Stoffe sind Füllstoffe und Pigmente.

Das Auftragen der erfindungsgemäss verwendeten Zusammensetzung bzw. Zusammensetzungen auf die zu beschichtenden Unterlagen kann in beliebiger für die Herstellung von Überzügen aus flüssigen Stoffen geeigneter und vielfach bekannter Weise erfolgen z.B. durch Tauchen, Streichen, Giessen, Sprühen, Aufwalzen, Drucken, Messer- oder Rakelbeschichtung, einschliesslich derjenigen mit einem Meyer-Stab (Meyer-rod), oder mittels einer Luftbürste.

Es kann eine wässerige Dispersion, die sämtliche Bestandteile 1 bis 8 enthält, einmal oder mehrfach auf jeweils zu beschichtende Unterlagen aufgetragen werden. Es kann aber auch einmal oder mehrfach zunächst eine wässerige Dispersion, die z.B. nur Bestandteil 5, 7 und 8 enthält, aufgetragen und danach eine wässerige Dispersion, welche die restlichen Bestandteile enthält, einmal oder mehrfach aufgetragen werden. Die letztere Arbeitsweise ergibt besonders wasch- und reinigungsbeständige Beschichtungen.

Die Vernetzung vom Organopolysiloxan 1 und 6 und der Polymeren bzw. Mischpolymeren in der Dispersion 8, wenn sie vernetzbar sind, erfolgt durch Erwärmen, vorzugsweise bei Temperaturen von mindestens 120°C. Um eine blasenfreie Beschichtung zu erhalten, wird vorzugsweise vorher bei 85 bis 95°C getrocknet. Bei mehrfachem Auftragen kann nach jedem Auftragen lediglich getrocknet und erst nach dem letzten Auftragen vernetzt werden.

Anstatt zu erwärmen, oder in Verbindung mit Erwärmen kann die Vernetzung auch durch Ultraviolettlicht bewirkt werden.

Bei einem Polyamidtaft mit einem Gewicht von 60 g/m² reichen 12 bis 15 g/m² an trockener Beschichtung aus.

In den folgenden Beispielen beziehen sich alle Angaben von Teilen und Prozentsätzen auf das Gewicht, soweit nichts anderes angegeben ist.

Das in den folgenden Beispielen verwendete Gemisch aus Platinkomplex und Verdünnungsmittel wurde hergestellt wie folgt:

Zu einer Mischung aus 10 Teilen $H_2PtCl_6 6H_2O$, 20 Teilen 1,3-Divinyl-1,1,3,3-tetramethyldisiloxan und 50 Teilen Ethanol wurden 20 Teile Natriumbicarbonat gegeben. Das Gemisch wurde 30 min unter Rühren zum Sieden unter Rückfluss erwärmt, dann 15 h stehengelassen und danach filtriert. Aus dem Filtrat wurden bei etwa 16 mbar die flüchtigen Bestandteile abdestilliert. Der Rückstand wurde in Benzol gelöst. Die Lösung wurde filtriert und aus dem Filtrat das Benzol abdestilliert. Der Rückstand wurde in Vinyldimethylsiloxygruppen als endständige Einheiten aufweisendem Dimethylpolysiloxan mit einer Viskosität von 1000 mPa·s bei 25°C in solcher Menge gelöst, dass die Lösung 1 Gew.-% Platin, berechnet als Element, enthält.

*Beispiel 1*

224 g einer wässerigen Emulsion, die enthält

37,7 Teile eines Vinyldimethylsiloxyeinheiten als endständige Einheiten aufweisenden Dimethylpolysiloxans mit einer Viskosität von 1000 mPa·s bei 25°C,

37,5 Teile eines Vinyldimethylsiloxyeinheiten als endständige Einheiten aufweisenden Dimethylpolysiloxans mit einer Viskosität von 20000 mPa·s bei 25°C,

4,0 Teile eines durch Trimethylsiloxygruppen endblockierten Diorganopolysiloxans aus 85,7 Mol-% Dimethylsiloxaneinheiten und 14,3 Mol-% Vinylmethylsiloxaneinheiten mit einer Viskosität von 1000 mPa·s bei 25°C,

8,3 Teile eines durch Trimethylsiloxygruppen endblockierten Organopolysiloxans aus 50 Mol-% Methylhydrogensiloxaneinheiten und 50 Mol-% Dimethylsiloxaneinheiten mit einer Viskosität von 120 mPa·s bei 25°C,

0,4 Teile des Gemisches aus Platinkomplex und Verdünnungsmittel, dessen Herstellung oben beschrieben wurde,

12,0 Teile einer als Haftmittel geeigneten Organosiliciumverbindung, die durch Umsetzung von 10 g Vinyltriacetoxysilan mit 13 g des Silans der Formel

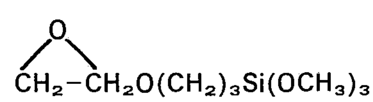

hergestellt wurde,

0,1 Teile Ethinylcyclohexanol,

wobei 37,5 Teile einer Konzentration von 19,3% in dieser Emulsion entsprechen, werden mit

730 g einer Methylolgruppen enthaltenden wässerigen Dispersion von Mischpolymer aus Ethylen und Vinylacetat mit einem Festgehalt von 45% (Vinnapas ® EN 300 der Wacker-Chemie GmbH), und

46 g eines in Wasser gelösten Verdickungsmittels auf Polyurethanbasis mit einem Festgehalt von 25% (Collacral ® LR 8500 BASF) vermischt. Das so erhaltene Gemisch wird mittels eines Rakelmessers auf dichtgewebten Polyamidtaft (Filamentgewebe) mit einem Gewicht von 60 g/m² aufgetragen. Anschliessend wird durch 30 s Erwärmen auf 90°C getrocknet und dann die Beschichtung durch 2 min Erwärmen auf 150°C vernetzt. Das Gewebe hat dann eine Auflage von 12 $g/m^2$.

Der Wasserdichtwert des beschichteten Gewebes beträgt 1000 mm Wassersäule nach DIN (Deutsche Industrie Norm) 53886. Dieser Wert bleibt auch nach einer Feinwäsche bei 30°C in einer Haushaltwaschmaschine erhalten. Auch nachdem das beschichtete Gewebe 8 d einer gesättigten Wasserdampfatmosphäre bei 90°C ausgesetzt wurde, ist keine Beeinträchtigung der Reibfestigkeit der Beschichtung festzustellen.

*Beispiel 2*

Eine wässerige Dispersion, die durch Vermischen von

96,0 Teilen der Methylolgruppen enthaltenden wässerigen Dispersion von Mischpolymer aus Ethylen und Vinylacetat mit einem Festgehalt von 45% (Vinnapas ® EN 300) mit

1,5 Teilen der als Haftmittel geeigneten Organosiliciumverbindung, die durch Umsetzung von 10 g Vinyltriacetoxysilan mit 13 g des Silans der Formel

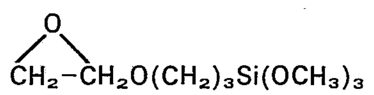

hergestellt wurde, und

2,5 Teilen eines in Wasser gelösten Mischpolymeren von N-Vinylpyrrolidon mit einem Festgehalt von 30% als Verdickungsmittel (Collacral ® VL, BASF)

hergestellt wurde, wird mittels eines Rakelmessers zweimal auf dichtgewebten Polyamidtaft (Filamentgewebe mit einem Gewicht von 60 $g/m^2$) aufgetragen. Dabei wird nach jedem Auftragen durch 45 s Erwärmen auf 95°C getrocknet.

Auf das so vorbeschichtete Gewebe wird eine wässerige Emulsion aufgetragen, die enthält

42,7 Teile des Vinyldimethylsiloxyeinheiten als endständige Einheiten aufweisenden Dimethylpolysiloxans mit einer Viskosität von 1000 mPa·s bei 25°C,

42,4 Teile des Vinyldimethylsiloxyeinheiten als endständige Einheiten aufweisenden Dimethylpolysiloxans mit einer Viskosität von 20000 mPa·s bei 25°C,

4,5 Teile des durch Trimethylsiloxygruppen endblockierten Diorganopolysiloxans aus 85,7 Mol-% Dimethylsiloxaneinheiten und 14,3 Mol-% Vinylmethylsiloxaneinheiten mit einer Viskosität von 1000 mPa·s bei 25°C,

9,7 Teile des durch Trimethylsiloxygruppen endblockierten Organopolysiloxans aus 50 Mol-% Methylhydrogensiloxaneinheiten und 50 Mol-% Dimethylsiloxaneinheiten mit einer Viskosität von 120 mPa·s bei 25°C,

0,5 Teile des Gemisches aus Platinkomplex und Verdünnungsmittel, dessen Herstellung oben beschrieben wurde, und

0,2 Teile Ethinylcyclohexanol,

wobei 42,7 Teile einer Konzentration von 20,5% in dieser Emulsion entsprechen und wobei je 9 Teile dieser Emulsion nach Zugabe von wenig wässerigem Ammoniak mit 1 Teil einer 6%igen Dispersion von Polyacrylsäure oder Polymethacrylsäure (Rohagit ® SD 15, Röhm GmbH) verdickt wurden.

Auch nach diesem dritten Auftragen wird durch 45 s Erwärmen auf 95°C getrocknet. Anschliessend wird die Beschichtung durch 2 min Erwärmen auf 150°C vernetzt. Das Gewebe hat dann eine Auflage von 23 $g/m^2$.

Der Wasserdichtwert des beschichteten Gewebes beträgt 1000 mm Wassersäule nach DIN 53 886. Nach 5 Feinwäschen bei 30°C in einer Haushaltwaschmaschine beträgt dieser Wert immer noch 900 mm Wassersäule. Auch nachdem das beschichtete Gewebe 8 d einer gesättigten Wasserdampfatmosphäre bei 90°C ausgesetzt wurde, ist keine Beeinträchtigung der Reibfestigkeit der Beschichtung festzustellen.

*Beispiel 3*

205 g einer wässerigen Emulsion, die enthält

40,5 Teile des Vinyldimethylsiloxyeinheiten als endständige Einheiten aufweisenden Dimethylpolysiloxans mit einer Viskosität von 1000 mPa·s bei 25°C,

40,3 Teile des Vinyldimethylsiloxygruppen als endständige Einheiten aufweisenden Dimethylpolysiloxans mit einer Viskosität von 20000 mPa·s bei 25°C,

4,3 Teile des durch Trimethylsiloxyeinheiten endblockierten Diorganopolysiloxans aus 85,7 Mol-% Dimethylsiloxaneinheiten und 14,3 Mol-% Vinylmethylsiloxaneinheiten mit einer Viskosität von 1000 mPa·s bei 25°C,

9,3 Teile des durch Trimethylsiloxygruppen endblockierten Organopolysiloxans aus 50 Mol-% Methylhydrogensiloxaneinheiten und 50 Mol-% Dimethylsiloxaneinheiten mit einer Viskosität von 120 mPa· bei 25°C,

0,4 Teile des Gemisches aus Platinkomplex und Verdünnungsmittel, dessen Herstellung oben beschrieben wurde,

5,0 Teile der als Haftmittel geeigneten Organosiliciumverbindung, die durch Umsetzung von 10 g Vinyltriacetoxysilan mit 13 g des Silans der Formel

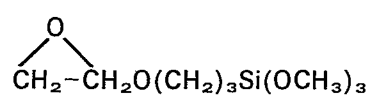

hergestellt wurde,

0,2 Teile Ethinylcyclohexanol,

wobei 40 Teile einer Konzentration von 20% in dieser Emulsion entsprechen, werden mit

745 g der Methylolgruppen enthaltenden wässerigen Dispersion von Mischpolymer aus Ethylen und Vinylacetat mit einem Festgehalt von 45% (Vinnapas ® EN 300), und

50 g des in Wasser gelösten Mischpolymeren von N-Vinylpyrrolidon mit einem Festgehalt von 30% als Verdickungsmittel (Collacral ® VL, BASF) vermischt. Je 10 Teile der so erhaltenen Mischung werden dann mit 1 Teil einer Mischung aus gleichen Teilen blauem Pigmentfarbstoff (Colanylblau AR) und einer $TiO_2$-Aufschlämmung in Wasser ($TiO_2$-Gehalt: 65%) vermischt.

Die so erhaltene farbige Dispersion wird auf weisses Polyestergewebe mit einem Gewicht von

154 g/m², dessen Kettgarn aus Filamentgarn und dessen Schussgarn aus Stapelfasergarn besteht, mittels eines Rakelmessers aufgetragen. Anschliessend wird durch 30 s Erwärmen auf 90°C getrocknet und schliesslich die Beschichtung durch 2 min auf 150°C vernetzt.

Die farbige Dispersion wird einmal in solcher Menge aufgetragen, dass die Auflage nach dem Vernetzen 30 g/m² beträgt, was einen Wasserdichtwert nach DIN 53 886 von 300 mm Wassersäule ergibt, und einmal in solcher Menge aufgetragen, dass die Auflage nach dem Vernetzen 45 g/m² beträgt, was einen Wasserdichtwert nach DIN 53 886 von 1000 mm Wassersäule ergibt.

Auch nachdem die beschichteten Gewebe 8 d einer gesättigten Wasserdampfatmosphäre bei 90°C ausgesetzt wurden, ist keine Beeinträchtigung der Reibfestigkeit der Beschichtung festzustellen.

Die beschichteten Gewebe sind z.B. für die Herstellung von Zelten oder Markisen sehr gut geeignet.

*Vergleichsversuch*

Eine wässerige Emulsion, die enthält

37,7 Teile des Vinyldimethylsiloxyeinheiten als endständige Einheiten aufweisenden Dimethylpolysiloxans mit einer Viskosität von 1000 mPa·s bei 25°C,

37,5 Teile des Vinyldimethylsiloxyeinheiten als endständige Einheiten aufweisenden Dimethylpolysiloxans mit einer Viskosität von 20000 mPa·s bei 25°C,

8,3 Teile des durch Trimethylsiloxygruppen endblockierten Organopolysiloxans aus 50 Mol-% Methylhydrogensiloxaneinheiten und 50 Mol-% Dimethylsiloxaneinheiten mit einer Viskosität von 120 mPa·s bei 25°C,

0,4 Teile des Gemisches aus Platinkomplex und Verdünnungsmittel, dessen Herstellung oben beschrieben wurde, und

0,1 Teile Ethinylcyclohexanol,

wobei 37,5 Teile einer Konzentration von 19,3% in dieser Emulsion entsprechen und wobei je 9 Teile dieser Emulsion nach Zugabe von wenig wässerigem Ammoniak mit 1 Teil einer 6%igen Dispersion von Polyacrylsäure (Rohagit ® SD 15, Röhm GmbH) verdickt wurden,

wird mittels eines Rakelmessers auf dichtgewebten Polyamidtaft (Filamentgewebe) mit einem Gewicht von 60 g/m² aufgetragen. Anschliessend wird durch 30 s Erwärmen auf 90°C getrocknet und dann die Beschichtung durch 2 min Erwärmen auf 150°C vernetzt. Das Gewebe hat dann eine Auflage von 14 g/m².

Es wird also praktisch die in Beispiel 1 beschriebene Arbeitsweise wiederholt, mit der Abänderung, dass kein durch Trimethylsiloxygruppen endblockiertes Diorganopolysiloxan aus Dimethylsiloxan- und Vinylmethylsiloxaneinheiten, keine als Haftmittel geeignete Organosiliciumverbindung und auch keine wässerige Dispersion von Mischpolymer aus Ethylen und Vinylacetat mitverwendet wird. Anstelle des in Beispiel 1 verwendeten Verdickungsmittels wird als weitere Abänderung lediglich deshalb ein anderes Verdickungsmittel verwendet, weil das in Beispiel 1 verwendete Verdickungsmittel zur Verdickung von wässerigen Organopolysiloxanemulsionen, die keine weiteren Polymeren enthalten, schlecht geeignet ist.

Der Wasserdichtwert des beschichteten Gewebes beträgt ebenfalls 1000 mm Wassersäule nach DIN 53 886. Dieser Wert sinkt jedoch nach einer Feinwäsche bei 30°C in einer Haushaltswaschmaschine auf weniger als 100 mm. Die Beschichtung lässt sich zudem leicht abreiben.

Die in den obigen Beispielen im Zusammenhang mit der Herstellung des dort verwendeten Haftmittels erwähnte Umsetzung wurde durch Vermischen der Reaktionsteilnehmer in den angegebenen Mengen und 1 h Erwärmen auf 200°C durchgeführt.

## Patentansprüche

1. Verfahren zur Beschichtung von Unterlagen, insbesondere von textilen Flächengebilden, durch Auftragen einer wässerigen Emulsion auf die jeweils zu beschichtende Unterlage, wobei die Emulsion enthält

1) in den endständigen Einheiten SiC-gebundene Vinylgruppen aufweisendes Diorganopolysiloxan,

2) mindestens 3 Si-gebundene Wasserstoffatome je Molekül aufweisendes Organopolysiloxan,

3) die Anlagerung von Si-gebundenem Wasserstoff an aliphatische Mehrfachbindung fördernder Katalysator,

und gegebenenfalls

4) eine derartige Anlagerung bei Raumtemperatur verzögerndes oder verhinderndes Mittel,

und ausserdem im Gemisch mit oder getrennt von dieser Emulsion von

5) Verdickungsmittel,

und in bekannter Weise erfolgende Vernetzung vom Organopolysiloxan, dadurch gekennzeichnet, dass vor dieser Vernetzung gleichzeitig mit oder getrennt von mindestens einem der Bestandteile (1) bis (5) auf die zu beschichtende Unterlage aufgetragen wird,

6) durch Trimethylsiloxygruppen endblockiertes Diorganopolysiloxan, worin an 10 bis 50% der Anzahl der Si-Atome der Diorganosiloxaneinheiten je eine Vinylgruppe als organischer Rest gebunden ist, während die übrigen organischen Reste in diesem Diorganopolysiloxan frei von aliphatischen Mehrfachbindungen sind,

7) als Haftmittel geeignete Organosiliciumverbindung, und

8) mindestens eine wässerige Dispersion von Polymeren aus Ethylen, Vinylacetat oder Acrylsäureester oder Mischpolymeren aus mindestens zwei dieser Monomeren.

2. Verfahren nach Anspruch 1, dadurch gekennzeichnet, dass durch Trimethylsiloxygruppen endblockiertes Diorganopolysiloxan, worin an 10 bis 50% der Anzahl der Diorganosiloxaneinheiten je eine Vinylgruppe als organischer Rest gebunden

ist, während die übrigen organischen Reste in diesem Diorganopolysiloxan frei von aliphatischen Mehrfachbindungen sind, in Mengen von 3 bis 30 Gew.-Teilen je 60 bis 90 Gew.-Teile Diorganopolysiloxan (1) eingesetzt wird.

3. Verfahren nach einem der beiden Ansprüche 1 oder 2, dadurch gekennzeichnet, dass als wässerige Dispersion (8) eine Dispersion von vernetzbaren Polymeren bzw. Mischpolymeren eingesetzt wird.

## Claims

1. Process for coating substrates, especially articles of textile sheets, by applying an aqueous emulsion to the substrate to be coated, the emulsion comprising

(1) a diorganopolysiloxane containing SiC-bonded vinyl groups in the terminal units,

(2) an organopolysiloxane containing at least 3 Si-bonded hydrogen atoms per molecule,

(3) a catalyst that promotes the addition of Si-bonded hydrogen to aliphatic multiple bonds, and, optionally,

(4) an agent that delays or prevents such addition at room temperature,

and, additionally applying, in admixture with or separately from the said emulsion,

(5) a thickening agent,

and by cross-linking the organopolysiloxane in known manner, characterised in that, prior to cross-linking, there is applied to the substrate to be coated, simultaneously with or separately from at least one of components (1) to (5),

(6) a trimethylsiloxy-terminated diorganopolysiloxane in which from 10 to 50% by number of the Si atoms in the diorganosiloxane units each carries one vinyl group as an organic radical, with the remaining organic radicals of the diorganopolysiloxane being free of aliphatic multiple bonds,

(7) an organosilicon compound that is suitable as an adhesive, and

(8) at least one aqueous dispersion of a polymer of ethylene, vinyl acetate or an acrylic acid ester, or a copolymer of at least two of such monomers.

2. Process according to claim 1, characterised in that the trimethylsiloxy-terminated diorganopolysiloxane, in which from 10 to 50% by number of the diorganosiloxane units contain a vinyl group as an organic radical, with the remaining organic radicals of the diorganopolysiloxane being free of aliphatic multiple bonds, is used in an amount of from 3 to 30 parts by weight per from 60 to 90 parts by weight of diorganopolysiloxane (1).

3. Process according to claim 1 or 2, characterised in that, as aqueous dispersion (8), there is used a dispersion of a cross-linkable polymer or copolymer.

## Revendications

1. Procédé pour revêtir des substrats, en particulier des articles planiformes textiles, par application d'une émulsion aqueuse sur le substrat à revêtir, l'émulsion contenant

1) un polydiorganosiloxane présentant, dans ses motifs terminaux, des groupes vinyles directement reliés à SiC,

2) un polyorganosiloxane présentant, par molécule, au moins 3 atomes d'hydrogène directement reliés à Si,

3) un catalyseur accélérant la fixation, sur une liaison multiple aliphatique, de l'hydrogène directement fixé à Si,

et, éventuellement,

4) un agent ralentissant ou empêchant à la température ambiante une telle fixation,

et, en outre, en mélange avec cette émulsion ou séparément d'elle,

5) un épaississant,

et par réticulation du polyorganosiloxane exécutée de façon connue, procédé caractérisé en ce que, avant cette réticulation, on applique sur le substrat à revêtir, en même temps qu'au moins l'un des constituants (1) à (5) ou séparément de ces constituants,

6) un polydiorganosiloxane à groupes triméthylsilyloxy terminaux, un groupe vinyle étant fixé comme radical organique sur 10 à 50% du nombre des atomes de silicium des motifs diorganosiloxaniques, cependant que les autres radicaux organiques de ce polydiorganosiloxane ne comportent pas de liaisons multiples aliphatiques,

7) un composé organosilicique convenant comme adhésif, et

8) au moins une dispersion aqueuse de polymères de l'éthylène, de l'acétate de vinyle ou d'un ester de l'acide acrylique, ou de copolymères d'au moins deux de ces monomères.

2. Procédé selon la revendication 1, caractérisé en ce qu'on utilise, en des quantités de 3 à 30 parties en poids pour 60 à 90 parties en poids du polydiorganosiloxane (1), un polydiorganosiloxane à groupes triméthylsilyloxy terminaux, un groupe vinyle étant fixé comme radical organique sur 10 à 50% des motifs diorganosiloxaniques, cependant que les autres radicaux organiques de ce polydiorganosiloxane ne comportent pas de liaisons multiples aliphatiques.

3. Procédé selon l'une des revendications 1 ou 2, caractérisé en ce qu'on utilise comme dispersion aqueuse (8) une dispersion de polymères ou copolymères réticulables.